Europäisches Patentamt

European Patent Office

Office européen des brevets

(11) Veröffentlichungsnummer: **0 282 608**

**A1**

## (12) EUROPÄISCHE PATENTANMELDUNG

(21) Anmeldenummer: 87103769.3

(22) Anmeldetag: 16.03.87

(51) Int. Cl.⁴: **F16L 23/04**

(43) Veröffentlichungstag der Anmeldung:
**21.09.88 Patentblatt 88/38**

(84) Benannte Vertragsstaaten:
**AT BE CH DE ES FR GB GR IT LI LU NL SE**

(71) Anmelder: **Geldner, Siegfried**
**Grobergerstrasse 3**
**D-8201 Neubeuern(DE)**

(72) Erfinder: **Geldner, Siegfried**
**Grobergerstrasse 3**
**D-8201 Neubeuern(DE)**

(74) Vertreter: **Flach, Dieter Rolf Paul, Dipl.-Phys.**
**et al**
**Patentanwälte Andrae/Flach/Haug/Kneissl**
**Prinzregentenstrasse 24**
**D-8200 Rosenheim(DE)**

(54) **Flanschverbindung.**

(57) 1. Flanschverbindung

2.1. Flanschverbindungen werden insbesondere zur Justierung und Verbindung von Kanalstücken verwandt. Bei im Querschnitt rohrförmigen Kanalstücken werden also bogenförmige Flanschverbindungen benötigt. Nur wenige Flanschverbindungen sind aber aus einem geraden Profilstück zu einem Bogenprofilstück verbiegbar. Zudem müssen derartige Bogenprofile eine bezüglich ihrer Breite groß dimensionierte Dicke aufweisen, um sicher und gleichmäßig gebogen zu werden. Die neue Flanschverbindung soll bei geringem Materialaufwand eine hohe Biegefestigkeit aufweisen und aus einem geraden Profilstück herstellbar sein.

2.2. Um dies zu ermöglichen, ist vorgesehen, daß am Außenrand des Ringflansches (7b) ein Bördelrand (11) gebildet ist, und daß das Verhältnis von der Breite zur Dicke des Ringflanschen (7b) mindestens 15:1, vorzugsweise mindestens 20:1 beträgt. Dadurch wird gewährleistet, daß der Ringflansch (7b) beim Verbiegen nicht wellig wird und am Außenumfang bei der verursachten Materialverdünnung keine Beschädigungen eintreten.

2.3. Die Flanschverbindung eignet sich insbesondere für die Klimatechnik zum Verbinden von rohrförmigen Kanalstücken.

Fig. 1

# Flanschverbindung

Die Erfindung betrifft eine Flanschverbindung nach dem Oberbegriff des Anspruches 1.

Derartige Flanschverbindungen werden in der Technik vielfältigst eingesetzt, beispielsweise zum Verbinden von Rohren oder beispielsweise auch von im Querschnitt rohrförmigen Kanalteilstücken, wie sie in der Klimatechnik angewandt werden.

Bekannte Bogenprofile für derartige Flanschverbindungen weisen deshalb je nach Einsatzzweck die unterschiedlichsten Formen auf.

So sind Flanschverbindungen nach Art einer Ringscheibe mit rechteckförmigem Querschnitt in unterschiedlichen Abmessungen bekannt geworden. Andere bekannte Flanschverbindungen bestehen aus einem Winkelprofil mit rechtwinkeligem Querschnitt, wobei die im Gegensatz zu dem radial wegstehenden Flansch bogenförmige Fläche innen-oder außenliegend rechtwinkelig wegstehen kann. Möglich sind aber auch im Querschnitt T-förmige oder U-förmige Bogenprofile, deren bogenförmiger Flansch ebenso innen-oder außenliegend vorgesehen sein kann.

Aus der DIN-Norm 24155 sind die technischen Daten bekannter Winkelflansche zum Verbinden von Rohren gezeigt. Dieses Bogenprofil umfaßt jeweils einen radial wegstehenden Ringflansch, der mit Bohrungen versehen sein kann, über welche ein benachbarter Ringflansch eines nächsten Bogenprofiles fest mitverbunden wird. Der von Ringflansch in Axialrichtung des Rohres rechtwinkelig wegstehende Bogenflansch schafft die Verbindung zu einem Rohr. Allerdings besteht immer ein typisches Verhältnis zwischen der Breite, d.h. der radialen Höhe eines Ringflansches zu seiner Materialdicke. Das Verhältnis ist dabei immer derart, daß die Breite zur Dicke maximal 10:1 beträgt. Dies ist deshalb notwendig, da beim Herstellen eines derartigen Bogenprofiles aus einem sich zunächst gerade erstreckenden Winkelprofil nur im begrenzten Maße eine Biegung durchgeführt werden kann. Denn im inneren Bereich des Bogenprofiles findet eine Stauchung statt, während außen am größten Umfang des Ringflansches eine Streckung durchgeführt wird. Dies führt zu einer Materialveränderung, nämlich im einen Fall zu einer Materialverdickung und im anderen Fall zu einer Materialverringerung.

Technisch führt dies dann immer dazu, daß - wenn entsprechende Verhältnisse, wie 10:1, nicht eingehalten werden, im inneren Bereich das Ringprofil sich wellig verformt, während im äußeren Bereich sogar Einkerbungen oder Einrisse auftreten können, so daß derartige Bogenprofile als Ausschußware ausgeliefert werden müssen.

Aufgabe der vorliegenden Erfindung ist es von daher, die Nachteile nach dem Stand der Technik zu überwinden und eine Flanschverbindung, insbesondere zum gegenseitigen Befestigen von kreisförmig geschlossenen oder bogenförmigen Kanalteil-oder Bauteilstücken zu schaffen, die bei geringem Materialbrauch sicher und problemlos aus einem geraden Winkelprofil in ein Bogenprofil gebogen werden können, ohne daß insbesondere am vorstehenden Ringflansch Beschädigungen auftreten und die auch eine wirksame Dichtung umfassen können.

Die Aufgabe wird erfindunsgemäß enstprechend den im kennzeichnenden Teil des Anspruches 1 angegebenen Mermalen gelöst. Vorteilhafte Ausgestaltungen der Erfindung sind in den Unteransprüchen angegeben.

Durch die vorliegende Erfindung wird ein Bogenprofil für eine Flanschverbindung geschaffen, das in nicht erwarteter Weise sich problemlos aus einem geraden Winkelprofilstück zu einem kreis-, bogen-oder beispielsweis ovalförmigen Bogenprofil biegen läßt. Dabei wird eine gegenüber dem Stand der Technik beachtliche Materialersparnis erzielt, da zum einen die Breite des Ringflansches gegenüber seiner Dicke Werte annehmen kann, die bei weitem besser liegen als 10:1, ja sogar noch oberhalb von 20:1 liegen können.

Selbst ein Verhältnis von 40:1 hat sich in der Praxis problemlos realisieren lassen. Dabei weisen die erfindunsgemäß hergestellten Bogenprofile trotz ihrer gegenüber dem Stand der Technik dünnwandigen Gestaltung eine hohe Biegestabilität auf.

Das erfindungsgemäß Bogenprofil ist im wesentlichen durch seinen am Außenumfang des Ringflansches vorgesehenen Bördelrand gekennzeichnet, wodurch eine geschmeidige Verformung ohne Materialdeformationen und -fehler vorgenommen werden kann.

Vor allem aber auch am innenliegenden, dem Stauchvorgang am stärksten unterliegenden Bereich ist erfindungsgemäß eine Bördelung vorgesehen. In dem Falle, daß am Innenbereich der Bogenflansch vorgesehen sein soll, ist anstelle der Bördelung eine Sicke von außen her eingebracht, die dem Stauchungsvorgang beim Biegen problemlos unterzogen werden kann, ohne daß das Material im gestauchten Bereich vor allem am Ringflansch wellig wird. Dies ist vor allem dann wichtig, wenn über die Flansche eine gute Flanschverbindung mit hoher Dichtwirkung erzielt werden muß.

Die Verhältnisse werden auch dann weiter verbessert, wenn der Bogenflansch ebenfalls in einen zumindest im Teilumfang rohrförmigen Bördelrand ausläuft.

Verbunden werden können einzelne Bogenprofile oder ein einstückiges Bogenprofil zu einem geschlossenen Kreis durch Verankern eines Montagesteges.

Der Montagesteg kann sich dabei entweder an der Rückseite des Ring-und/oder des Bogenflansches jeweils zwischen der Sicke und dem gegenüberliegenden Bördelrand abstützen.

In der Sicke selbst kann problemlos eine Dichtlippe verankert werden, wodurch ohne weitere Erhöhung des Montageaufwandes auch ein sicherer Halt für eine verbesserte Dichtwirkung erzielt wird.

Die Dichtlippe kann dabei bevorzugte Querschnittsformen aufweise, um eine hohe Dichtwirkung zu erzielen.

Es ist zwar grundsätzlich aus der EP-A-148 286 eine Flanschverbindung mit einem nicht gebogenen geraden Winkelprofil bekannt geworden, dessen Querschnitt Ähnlichkeiten zu dem vorliegenden Querschnitt der Profiles aufweist. Sich gerade erstreckende Winkelprofile dürfen allerdings mit Bogenprofilen nicht verglichen werden. Denn es ist vielfach bekannt, daß die unterschiedlichsten Winkelprofile für sich gerade erstreckende Flanschverbindungen technisch produzierbar sind, ohne daß dies bereits Indizien dafür ergibt, daß derartige ähnlich aufgebaute Profilstücke anschließend auch einen Biegevorgang unterzogen werden können. Denn an sich bekannte˙ Querschnittsformen sagen für sich genommen nichts darüber aus, ob sie auch für ein Bogenprofil geeignet sind. Vielmehr ist im Gegenteil davon auszugehen, daß an sich bekannte Querschnitt von sich gerade erstreckenden Winelprofilen grundsätzlich nicht für Bogenprofile geeignet sind. Von daher werden auch nur die eingangs zitierten Bogenprofile mit einem T-, einem U-oder einem L-Querschnitt produziert, wobei die Breite des Ringflansches zur Dicke Verhältnisse von weniger als 10:1 aufweisen müssen.

Weitere Vorteile, Einzelheiten und Merkmale der Erfindung ergeben sich nachfolgend aus den anhand von Zeichnungen dargestellten Ausführungsbeispielen. Dabei zeigen im einzelnen:

Figur 1 : eine ausschnittweise perspektivisch Darstellung eines im Querschnitt rohrförmigen Bauteilstückes mit teilweise umgebendem Bogenprofil;

Figur 2 : eine Querschnittdarstellung durch das Bogenprofil gemäß Figur 1 mit einem eingesteckten Verbindungssteg an der Schnittstelle;

Figur 3 : einen Querschnitt durch eine in einer Sicke eingesetzte Dichtlippe;

Figur 4 : eine Querschnittdarstellung des auf ein im Querschnitt kreisförmiges Bauteilstück aufgestecktes Bogenprofils;

Figur 5 bis 7 : drei Ausführungsbeispiele einer Klemmeinrichtung für die Bogenprofile.

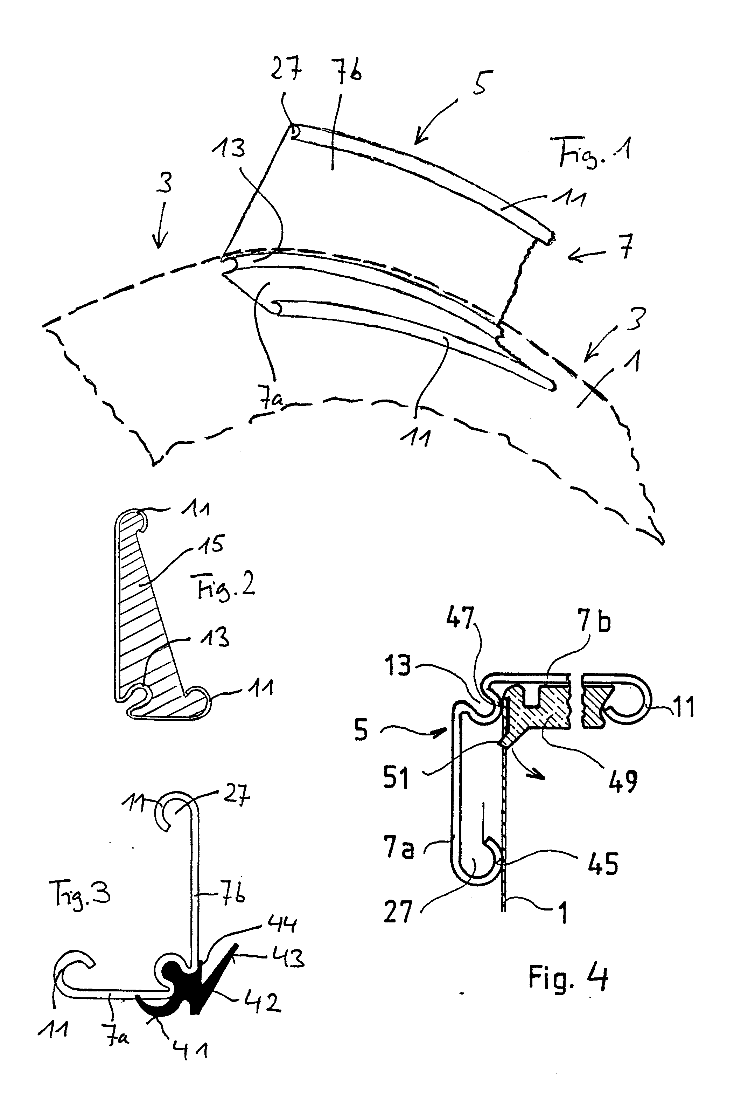

In Figur 1 ist eine Wand 1 in strichlierter Darstellung eines im Querschnitt rohrförmigen Kanalteil-bzw. Bauteilstückes 3 mit einer aufgesteckten Bogenprofil 5 gezeigt. Das Bogenprofil 5 weist dabei zwei Flansche 7 auf, nämlich einen am rohrförmigen Kanalteilstücke anliegenden Bogenflansch 7a und einen quer dazu radial vorstehenden Ringflansch 7b.

Aus den Zeichnungen geht hervor, daß sowohl der Bogen-als auch der Ringflansch 7a bzw. 7b an ihrem Außenumfang 9 in einen Bördelrand 1 übergehen. Im Übergangsbereich zwischen den beiden senkrecht aufeinander stehenden Flanschen 7a und 7b ist symmetrisch zur Winkelhalbierenden eine nach innen weisende Sicke 13 eingebracht.

Wie aus den Zeichnungen ersichtlich ist, läuft der jeweilige Bördelrand 11 im Querschnitt zumindest in einem Teilumfang rohrförmig aus, wodurch ein Halbraum 27 gebildet wird. Die Abmessungen können problemlos derart sein, daß der Bördelrand beispielsweise einen Außendurchmesser von 2 mm bis 10 mm, vorzugsweise 4 mm bis 6 mm aufweist. Die Breite des Ringflansches kann 1 cm bis 6 cm, vorzugsweise 2,5 bis 5 cm aufweisen, wobei eine Materialdicke von 0,5 bis 3 mm, vorzugsweise von 0,8 bis 1,5 mm möglich ist. Im gezeigten Ausführungsbeispiel wird eine Materialdicke von 1 mm verwandt, wobei die Breite des Ringflansches 3,5 cm beträgt. Derartige Abmessungen mit einem Verhältnis von Ringbreite zur Materialdicke von beispielsweise 35:1 sind bei bisher bekannt gewordenen Bogenprofilen nicht möglich gewesen. Bei bekannten Profilen besteht nämlich das Problem, daß beim Verformen aus einem entsprechend gerade verlaufenden Profilstück in das in den Zeichnungen dargestellte Bogenprofil schwerwiegende Materialverformungen auftreten und auftraten. Es konnten deshalb nur wenige Standardprofile mit erheblich stark bemessenen Dicken verformt werden.

Eine Verbindung zweier Bogenflansche oder das Schließen eines Bogenprofiles zu einem geschlossenen Kreis erfolgt an der Schnittstelle mittels eines Montagesteges 15, der auf der Rückseite des Bogenprofiles am Parallel-und/oder Querflansches 7a bzw. 7b durch Einstecken verankert werden kann.

Der Montagesteg 15 stützt sich dabei jeweils zwischen der Sicke 13 und dem gegenüberliegenden Bördelrand 11 ab. Er kann aus einem geraden Montagesteg bestimmter Länge oder aus einem entsprechenden aus einem bogen-bzw. ringförmig gebogenen Montagesteg bestehen.

In Figur 3 ist der Querschnitt einer Dichtlippe 42 gezeigt, die Dichtflächen aufweist, weshalb zwei Dichtlippenstege 41 und 43 gebildet sind. Der Dichtlippensteg 41 ist im Qerschnitt bogenförmig gestaltet, dessen Rand unter Anlage am Bogenflansch 7a endet. Ein derartiger Dichtlippensteg wird vor allem bei Rundkanalstücken in der Klimatechnik verwandt, um bei der druchströmenden Luft keine Verwirbelungen zu verursachen.

Der zweite Dichtlippensteg 43 wirkt mit dem Ringflansch 7b zusammen und läuft im unbelasteten Zustand nach außen hin leicht divergierend aus. Ein besonders dichter Anlagesitz der Dichtlippe 42 wird gemäß dem Halteansatz 44 gewährleistet, der als innenliegender verkürzter Dichtlippen-Doppelsteg zur Dichtlippe 43 verstanden werden kann.

Die Dichtlippe 42 wird beim fertig hergestellten Bogenprofil über den Längsspalt der Sicke 13 eingesteckt, wozu die Dichtlippe 42 einen verstärkten Steckansatz aufweist, der im gezeigten Ausführungsbeispiel entgegen der Einsteckrichtung widerhakenähnlich verstärkt sein kann.

Nachfolgend wird nunmehr noch auf die Verankerung der Bogenprofile 5 an den Wänden 1 von im Querschnitt runden Kanalteilstücken eingegangen.

Gemäß Figur 4 wird dabei ein Bogenprofil 5 auf eine Wand 1 jeweils so aufgesteckt, daß der Parallelflansch 7a im Kanalstück zu liegen kommt und von seinem Bördelaußenrand 45 bzw. seinem Sickenaußenrand 47 an der Wand 1 anliegt. Möglich ist aber genauso eine feste Verschweißung mit einer Wand 1, wobei sich in diesem Fall eine Anordnung derart anbietet, daß der Parallelflansch 7a außenliegend an der Wand 1 angeordnet wird, so daß das Rohr völlig vom Bogenprofil 5 umgeben ist.

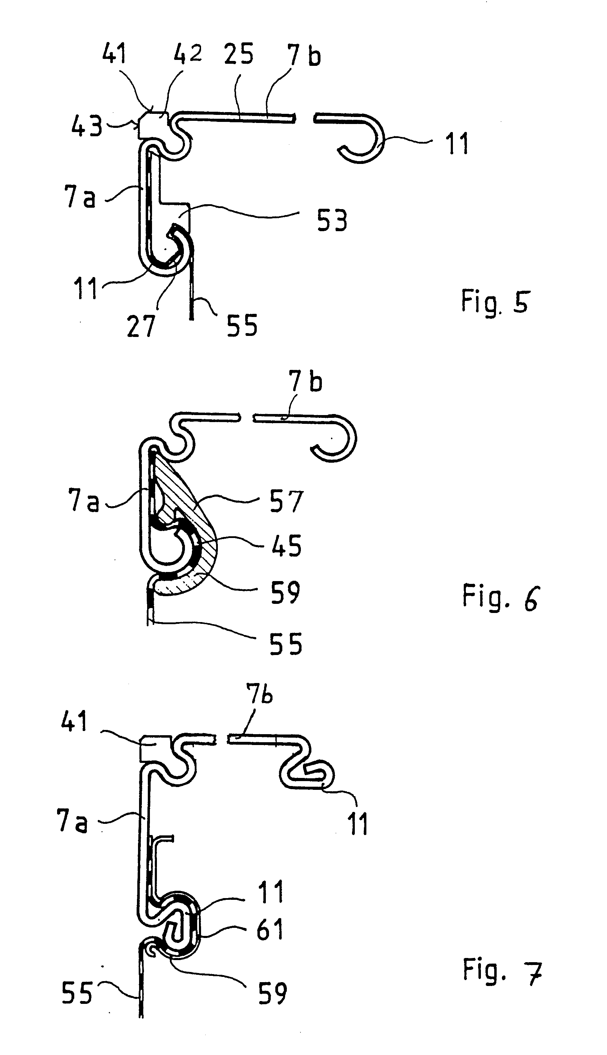

Bei der lediglich klemmenden Verankerung ist eine Klemmeinrichtung aus elastomerem Werkstoff mit einer Klemmleiste 49 vorgesehen, die am zugeordneten Ringflansch 7b sich am dortigen Bördelrand 11 abstützt und vorzugsweise mit einem vorstehenden Drucknippel 51 auf die Außenseite der Wand 1 drückt. Der in Figur 6 gezeigte Drucknippel 51 ist im montierten Zustand gemäß dem Pfeil nach außen gebogen. In den Figuren 5 bis 7 ist eine Verankerung eines Bau- bzw. Kanalteilstückes 3 aus elastomerem Werkstoff, beispielsweise in Form eines elastischen Balges gezeigt. Derartige Elemente werden insbesondere in der Klimatechnik als Dämpfer verwandt, da sich hier die Schallwellen im Gegensatz zu aus Metall bestehenden Kanalstückteilen weniger gut ausbreiten können.

Die Klemmeinrichtung gemäß Figur 5 umfaßt einen vorzugsweise elastischen Haltekeil 53, der in einem entsprechenden durch den Bördelrand 11 gebildeten Halbraum 27 und der gegenüberliegenden Sicke 13 verspannt wird. Die elastische Wand 55 des nicht näher gezeigten Balges wird dabei um die Sickenaußenwand 47 herum in den Halbraum 27 hinein und in Anlage auf der rückwärtigen Seite am Bogenflansch 7a festgehalten.

Figur 6 zeigt einen abgewandelten Klemmkeil 57 mit einem durch den Bördelaußenrand 45 umgreifenden Finger 59. Dadurch wird die Wand 55 fluchtend zum Bodenflansch 7a ausgerichtet.

Beim Ausführungsbeispiel gemäß Figure 7 ist der Bördelrand noch in Gegenrichtung abgewickelt. Die Befestigungh der elastischen Wand 55 erfolgt hierbei über eine diesen Bördelrand nach Art eines Schnappverschlusses umgreifenden Halteklammer 61.

Durch die vorstehend erläuterten Ausführungsformen des Bogenprofiles können also beliebige Bogenformen nachgebildet sein, die nicht nur kreisförmigen Querschnitt aufweisen müssen.

Eine Endmontage zwischen zwei Bogenprofilen 5, die jeweils mit einem Rohrstück verbunden bzw. angeschweißt sind, kann über eine Schraubverbindung erfolgen, die durch in den Zeichnungen nicht näher dargestellten Bohrungen in den Ringflanschen (7b) hindurchgeführt wird. Möglich ist aber genauso, eine Verbindung mittels einer übergreifenden Klemmleiste herzustellen, die im Querschnitt beispielsweise U-Förmig ausgebildet und die mit ihren beiden Schenkeln über die beiden Bördelränder zweier benachbarter Ringflansche 7b aufgesteckt wird.

Das Verhältnis zwischen Ringflanschbreite zur Materialdicke beträgt erfindungsgemäß mindestens 15:1. Andere Verhältnisse von mindestens 16:1, 17:1 etc. bis zumindest 60:1 sind aber ebenso möglich.

Die erfindungsgemäßen Bogenprofile sind dabei aus Metall oder Metallegierungen geformt, die entsprechen verbogen werden können. Darüber hinaus bietet das Profil aber auch an sich unabhängig von der Materialwahl durch die Verwendung der Bördelung 11 und durch die Sicke 13 eine sehr hohe Biegefestigkeit bei insgesamt geringer Materialdicke.

Weitere Vorteile des erfinsungsgemäßen Bogenprofils liegen auch darin, daß as prblemlos mit Klemmteilen und Dichtlippen ausgestattet werden kann, wie sie an sich bei einem geraden Profilteil mit gleichem Querschnitt auch verwendbar sind.

## Ansprüche

1. Flanschverbindung, insbesondere zur gegenseitigen Befestigung von kreisförmig geschlossenen oder bogenförmigen Kanal-bzw. Bauteilstücken, bestehend aus einem Bogenprofil (5) mit einem Ringflansch (7b), der mit einem nächsten parallel dazu ausrichtbaren Ringflansch (7b) eines nächsten Bogenprofiles (5) verbindbar ist, und mit einem davon vorzugsweise am Innenrand des Bogenprofils (5) winkelig wegstehenden und insbesondere an dem Kanal-bzw. Bauteilstück anbringbaren Bogenflansch (7a), **dadurch gekennzeichnet,** daß am Außenrand des Ringflansches (7b) ein Bördelrand (11) gebildet ist, und daß das Verhältnis von der Breite zur Dicke des Ringflansches (7b) mindestens 15:1, vorzugsweise mindestens 20:1 beträgt.

2. Flanschverbindung nach Anspruch 1, **dadurch gekennzeichnet,** daß im Übergangsbereich vom Ring-zum Bogenflansch (7b, 7a) eine von der Profilaußenseite aus eingebrachte Sicke (13) vorgesehen ist.

3. Flanschverbindung nach Anspruch 1 oder 2, **dadurch gekennzeichnet,** daß der Bogenflansch (7a) ebenfalls in einem Bördelrand (11) ausläuft.

4. Flanschverbindung nach einem der Ansprüche 1 bis 3, **dadurch gekennzeichnet,** daß der Bördelrand (11) und/oder die Sicke (13) im Querschnitt zumindest in einem Teilumfang rohrförmig bzw. teilrohrförmig unter Bildung eines Halbraumes (27) gebogen ist.

5. Flanschverbindung nach einem der Ansprüche 1 bis 4, **dadurch gekennzeichnet,** daß die Stirnenden eines oder mehrer Bogenprofile (5) über einen Montagesteg (15) verbindbar sind, der sich an beiden stirnseitig zusammengesetzten Bogenprofilen (5) jeweils zwischen der Sicke (13) und dem Bördelrand (11) am Bogenflansch (7a) und/oder am Ringflansch (7b) abstützt.

6. Flanschverbindung nach einem der Ansprüche 1 bis 5, **dadurch gekennzeichnet,** daß die Sicke (13) symmetrisch zur Winkelhalbierenden zwischen den beiden Flanschen (7a, 7b) gestaltet ist.

7. Flanschverbindung nach einem der Ansprüche 1 bis 6, **dadurch gekennzeichnet,** daß in der Sicke (13) eine Dichtlippe (42) mit ihrem Verankerungsabschnitt eingesteckt ist, der vorzugsweise gegenüber dem Längsspalt der Sicke (13) verdickt ausgebildet ist.

8. Flanschverbindung nach einem der Ansprüche 1 bis 7, **dadurch gekennzeichnet,** daß die Dichtlippe (42) im wesentlichen je einen mit dem Bogen-bzw. Ringflansch (7a, 7b) zusammenwirkenden Dichtlippensteg (41, 43) aufweist.

9. Flanschverbindung nach Anspruch 8, **dadurch gekennzeichnet,** daß der eine Dichtlippensteg (41) am Bogenflansch (7a) im Querschnitt bogenförmig gestaltet ist, dessen Rand vorzugsweise unter Anlage am Bodenflansch (7a) endet.

10. Flanschverbindung nach Anspruch 9 oder 10, **dadurch gekennzeichnet,** daß der andere Dichtlippenstep (43) am Ringflansch (7b) im wesentlichen eben gestaltet ist und im unbelasteten Zustand zur angrenzenden Ringflanschebene divergierend ausläuft.

11. Flanschverbindung nach einem der Ansprüche 9 bis 10, **dadurch gekennzeichnet,** daß die Dichtlippe (42) mit einem Halteansatz (42) versehen ist, der im Übergangsbereich von dem in der Sicke (13) eingesteckten Verankerungsabschnitt zum Ringflansch (7b) anliegend ausgebildet ist.

12. Flanschverbindung nach einem der Ansprüche 1 bis 11, **dadurch gekennzeichnet,** daß die Breite des Ringflansches zumindest 1 bis 6 cm, vorzugsweise 2,5 bis 5 cm aufweist, wobei die Materialdicke 0,5 bis 3 mm, vorzugsweise 0,8 bis 1,5 mm beträgt.

13. Flanschverbindung nach einem der Ansprüche 1 bis 12, **dadurch gekennzeichnet,** daß der Bördelrand (11) und/oder die Sicke (13) eine rohrförmigen Teildurchmesser von 2 mm bis 10 mm, vorzugsweise 4 mm bis 6 mm aufweist.

Fig. 1

Fig. 2

Fig. 3

Fig. 4

Fig. 5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 078 946 (KARL MEINIG KG) * Figuren 3,4; Zusammenfassung; Seite 1, Zeilen 1-6; Seite 4, Zeilen 11-19; Seite 13, Zeilen 9-29 * | 1 | F 16 L 23/04 |
| A | | 4 | |
| | --- | | |
| D,Y | EP-A-0 148 286 (GELDNER) * Seiten 1-13 * | 1 | |
| A | | 2-12 | |
| | ----- | | |

|  | RECHERCHIERTE SACHGEBIETE (Int. Cl.4) |
|---|---|
|  | F 16 L |

Der vorliegende Recherchenbericht wurde für alle Patentansprüche erstellt.

| Recherchenort | Abschlußdatum der Recherche | Prüfer |
|---|---|---|
| DEN HAAG | 13-11-1987 | NOESEN R.F. |